# EUROPEAN PATENT SPECIFICATION

(11) **EP 2 735 237 B1**
(45) Date of publication and mention of the grant of the patent: **29.07.2015**
(21) Application number: 13194144.5
(22) Date of filing: 22.11.2013
(51) Int. Cl.: A23N 12/00, A23N 12/02, A01D 33/08

(54) **Method and device for transport and cleaning of products, in particular agricultural products such as onions, potatoes and carrots**
Verfahren und Vorrichtung zum transportieren und säubern von agrarprodukten, insbesondere Zwiebeln, Karotten und Kartoffeln
Procédé et appareil pour transporter et nettoyer des produits, en particulier des oignons, carottes et pommes de terre

(30) Priority: 22.11.2012 NL 2009859
(43) Date of publication of application: 28.05.2014
(73) Proprietor: Machinefabriek Grisnich B.V., 8305 AA Emmeloord (NL)
(72) Inventor: Noordeloos, Rene, 8307 EA Ens (NL)
(74) Representative: Louwaard, Jan-Willem Paul

(56) References cited:
- DE-U1-202009 001 396
- US-A- 2 453 457

## Description

### Description introduction

The present invention relates to a method and device for transporting and cleaning products, in particular agricultural products such as onions, potatoes and carrots. Such methods are known from DE 20 2009001396 U and US 2453457.

During harvesting of agricultural products such as onions, potatoes and carrots a quantity of the soil in which these agricultural products are cultivated remains adhered to the product concerned. Following harvesting the products are transported to a processing installation. The soil adhering to the products must usually be removed during the processing of products. This removal generally takes place by means of washing in water and then drying the products. This washing and subsequent drying of the products costs energy and produces a flow of waste water.

The present invention has for its object, among others, to reduce the above stated energy costs and waste water flow.

The present invention provides for this purpose a method for transporting and cleaning products, in particular agricultural products such as onions, potatoes and carrots, in a direction of transport along a transport path, comprising the steps of:
- forming in a part of a conveyor belt a pattern of successive waves extending at least in a direction transversely of the transport path;
- displacing the waves formed in the conveyor belt in the direction of transport;
- placing the products for transporting and cleaning onto the conveyor belt in order to carry the products into a wave valley of the pattern of waves and transporting along the transport path the products carried into the wave valley by means of displacing the waves formed in the conveyor belt in the direction of transport; and
- displacing the conveyor belt relative to the waves in the direction in which the transport path extends.

Making use of waves which are formed in a conveyor belt and which displace in direction of transport for the purpose of transporting the products and simultaneous displacement of the conveyor belt relative to the waves make it possible to displace the products, which are situated in a wave valley on the conveyor belt, inside this wave valley in the direction of one of the two adjacent wave peaks. The products which are thus displaced in the direction of one of the two adjacent wave peaks are pulled back here by gravitational force in the direction of the wave valley and roll or fall back at a certain moment in the direction of the wave valley. As they roll or fall back down the products come into contact with each other and with the surface of the conveyor belt, wherein the soil adhering to the products is forced off the products as a result of friction forces. A cleaning action is thus obtained during transport of the products. This cleaning action during transport has the advantage that the products require less washing and drying downstream during processing of the products, so that a reduction in energy and quantity of waste water is possible, this without interrupting the transport of the products, whereby the method according to the invention can be implemented particularly well in existing processing installations requiring a continuous flow of products as feed.

A favourable embodiment of the method according to the invention additionally comprises the step of controlling the displacement speed of the conveyor belt relative to the waves in order to control the degree of cleaning of the products. The displacement speed of the conveyor belt relative to the waves influences the extent to which the products in the wave valley are displaced in the direction of the wave peaks, and thereby the extent to which the products roll or drop back. Since it is the rolling or dropping back of the products which provides for the cleaning action, variation of the displacement speed of the conveyor belt relative to the waves, i.e. increasing or reducing the displacement speed, enables a variation in the degree of cleaning of the products. In addition, the maximum angle of the wave surface relative to the gravitational force between the wave valley and the respective adjacent wave peaks also influences the extent to which the products in the wave valley are displaced in the direction of the wave peaks, and thereby the extent to which the products roll or drop back. Varying for instance the angle of the transport path relative to the direction of the gravitational force makes it possible to vary the maximum angle of the wave surface relative to the gravitational force between the wave valley and the respective adjacent wave peaks, and thereby also the degree of cleaning. The choice of the direction of displacement of the conveyor belt relative to the waves, i.e. the choice between displacement of the conveyor belt in the direction of displacement of the waves or displacement of the conveyor belt in opposite direction to the displacement of the waves, can also influence the degree of cleaning. This latter is particularly the case when the maximum angle of the wave surface relative to the gravitational force between the wave valley and the respective adjacent wave peaks differs. Such a difference occurs for instance when the transport path extends at an angle relative to the gravitational force.

In a favourable embodiment of the method according to the invention the conveyor belt is displaced along the transport path. This makes it possible for instance to change the displacement speed of the conveyor belt relative to the waves without changing the displacement speed of the waves along the transport path. The conveyor belt is preferably displaced along the transport path in the direction of transport. This has the advantage that the conveyor belt can also be used to transport the products to the location where the pattern of waves is formed and/or to transport the products away from the location where the pattern of waves is formed. The conveyor belt is alternatively displaced along the transport path in the direction opposite to the direction of transport. In the case of an endless conveyor belt displacement of the conveyor belt is understood to mean the displacement of the part of the conveyor belt which is in contact with the products for transporting and cleaning.

In a favourable embodiment of the method according to the invention the conveyor belt is displaced in the direction of transport relative to the waves.

The present invention also relates to a device for transporting and cleaning products, in particular agricultural products such as onions, potatoes and carrots, in a direction of transport along a transport path, comprising:
- a frame;
- a conveyor belt arranged on the frame;
- a support construction arranged on the frame for supporting the conveyor belt along the transport path;
wherein the support construction comprises:
- a plurality of first support members which are arranged movably relative to the frame and can be brought into contact with a first side of the conveyor belt; and
- a plurality of second support members which are arranged movably relative to the frame and can be brought into contact with a second side of the conveyor belt remote from the first side;
wherein the second support members are offset in the direction of the transport path relative to the first support members and are placeable between successive first support members in the direction of the transport path in order to form in the conveyor belt a pattern of successive waves extending at least in a direction transversely of the transport path; and
- the support construction also comprises:
   - a support drive acting on the first and second support members and configured to displace the first and second support members relative to the frame such that the waves formed in the conveyor belt displace in the direction of transport along the transport path.

Such a device according to the invention makes it possible to implement the above stated method according to the invention in a transporting and/or processing system for products, in particular agricultural products such as onions, potatoes and carrots.

In a favourable embodiment of the device according to the invention the conveyor belt is embodied as an endless conveyor belt and the device also comprises a conveyor belt drive engaging on the conveyor belt and configured to displace the conveyor belt relative to the frame along the transport path.

Embodying the conveyor belt as an endless conveyor belt and providing a drive for displacing the conveyor belt relative to the frame along the transport path contribute toward the implementation of the possibility of moving the conveyor belt relative to the waves, of varying the speed of movement of the conveyor belt relative to the waves, and also the possibility of making use of the conveyor belt to feed products to and discharge products from the formed waves. Alternatively, the conveyor belt is not displaceable relative to the frame along the transport path. In that case the waves displace in the direction of transport along the conveyor belt and the conveyor belt displaces in a direction opposite to the direction of transport relative to the waves.

In a further favourable embodiment of the device according to the invention, in which the conveyor belt is embodied as endless conveyor belt and a conveyor belt drive is provided, the device also comprises a control system which is operatively connected to at least one of the support drive and the conveyor belt drive and configured such that the displacement speed of the conveyor belt relative to the waves is controllable.

Such a control device contributes toward the implementation of the possibility of varying the displacement speed of the conveyor belt relative to the waves. Controlling the conveyor belt drive in particular makes it possible to increase or decrease the displacement speed of the conveyor belt relative to the waves without influencing the displacement speed of the waves along the transport path, and thereby without influencing the transport speed of the device. Controlling the support drive on the other hand makes it possible to increase or decrease the displacement speed of the conveyor belt relative to the waves without influencing the displacement speed of the conveyor belt relative to the frame, and thereby without influencing the feed and discharge speed of the products when the conveyor belt is also used to feed and discharge the products. Controlling both the conveyor belt drive and the support drive for instance makes it possible, when the displacement speed of the conveyor belt relative to the waves is increased or decreased, to opt for a change suitable for the relevant situation in both the displacement speed of the conveyor belt relative to the frame and the displacement speed of the waves. In the above stated alternative embodiment, wherein the conveyor belt is not displaceable relative to the frame along the transport path, the displacement speed of the conveyor belt relative to the waves can be varied by controlling the support drive.

A favourable embodiment of the device according to the invention is configured such that:
- the first support members are arranged on the frame for displacement along the transport path in a first peripheral endless configuration; and
- the second support members are arranged on the frame for displacement along the transport path in a second peripheral endless configuration;
   wherein in use and as seen in the direction of transport:
   - the second support members are placed between successive first support members at the beginning of the transport path so that a part of the wave pattern is formed in the part of the conveyor belt situated between the relevant first and second support members; and
   - the first and second support members are moved away from each other at the end of the transport path so that the second support members are no longer situated between successive first support members; and
   - the direction of displacement of the first and second support members is reversed at the end of the transport path so that the first and second support members are displaced in the direction of the beginning of the transport path.

This embodiment enables a particularly robust implementation of the support construction which is moreover easily drivable. It is thus possible to drive only one of the two endless configurations directly. Because the second support members are placed between the first support members, with direct driving of for instance the endless configuration of the first support members the endless configuration of the second support members is co-displaced and thus driven indirectly. Alternatively, it is for instance possible to embody the first and second support members on a row of arms which extend along the transport path and which are each movable up and downward in a direction transversely of the direction of transport. Moving successive arms in the row up and downward with a phase difference in such a configuration makes it possible to form in the conveyor belt the pattern of waves displacing in direction of transport.

In a further favourable embodiment of the device according to the invention the conveyor belt is a screen belt.

The embodiment of the conveyor belt as screen belt makes it possible for the dislodged soil to fall through the conveyor belt and thus be carried away immediately after being dislodged. The dislodged soil is thus prevented from adhering to the products again. In addition, the open structure of a screen belt contributes toward the friction between the products and the surface of the conveyor belt, so enhancing the cleaning action. An example of a suitable screen belt is a bar-type screen belt. Alternatively, the conveyor belt has a surface with a closed structure. In that case the dislodged soil will have to be discharged in other manner.

Although the method and the device according to the invention are particularly suitable for transporting and cleaning potatoes, onions and carrots, the method and the device according to the invention are not limited to the transport and cleaning of these specific products.

### Figure description

The present invention will be further elucidated hereinbelow on the basis of a number of exemplary embodiments shown schematically in the accompanying figures. These are non-limitative exemplary embodiments. In the figures:
- Figure 1 is a perspective view of an embodiment of the device according to the invention illustrating the construction of a device according to the invention;
- Figure 2 is a cross-sectional side view of the embodiment of the device according to the invention of figure 1 illustrating the method according to the invention;
- Figures 3-6 are cross-sectional side views of the embodiment of the device according to the invention of figure 1 in a number of successive positions of moving parts through time during performing of the method according to the invention.

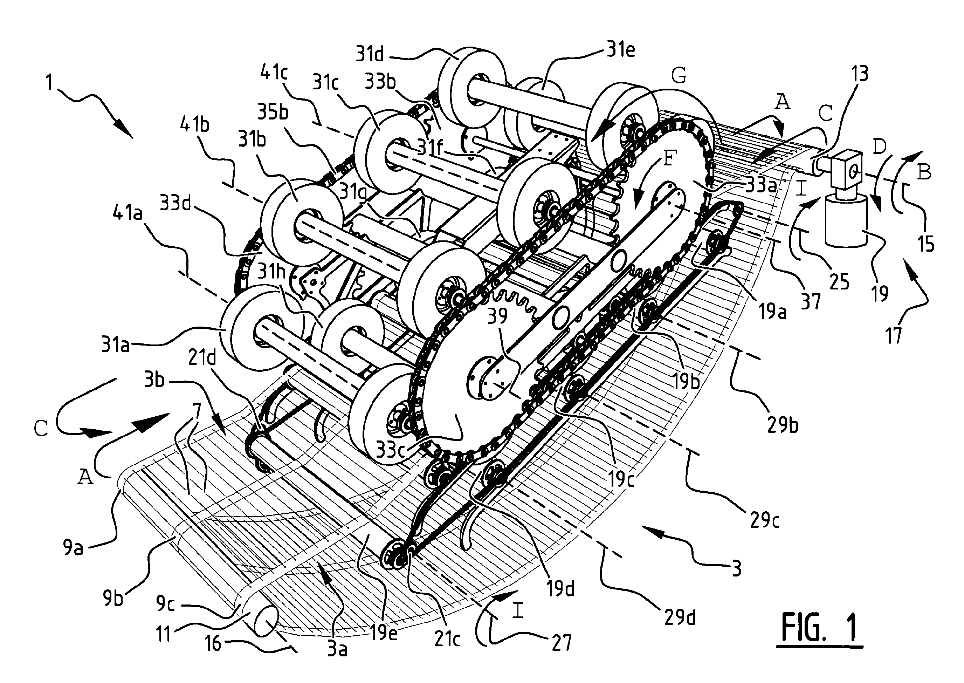

Figure 1 shows a device 1 for transporting and cleaning products according to the invention. Device 1 has a conveyor belt 3 and a support construction 5 for supporting conveyor belt 3. Conveyor belt 3 and support construction 5 are arranged on a frame of device 1 which is not shown in figure 1 in order to make conveyor belt 3 and a support construction 5 clearly visible.

Conveyor belt 3 is a belt with a lower surface 3a and an upper surface 3b formed in an endless configuration. In the shown embodiment the endless conveyor belt takes the form of a bar-type screen belt. The bar-type screen belt is constructed from a plurality of bars 7 which are mutually connected by means of a number of, in this case three, flexible endless belts 9. Conveyor belt 3 is arranged on the frame of device 1 by means of two conveyor belt reversing rollers 11 and 13. Conveyor belt reversing roller 13 is rotatable about the rotation axis 15 thereof by means of a conveyor belt drive 17 comprising an electric motor 19. Conveyor belt reversing roller 11 is rotatable about the rotation axis 16 thereof. By rotating the driven conveyor belt reversing roller 13 by means of the conveyor belt drive 17 the conveyor belt 3 is displaceable relative to the frame in the direction of arrows A when the driven conveyor belt reversing roller 13 is rotated in the direction of arrow B, and is displaceable relative to the frame in the direction of arrows C when the driven conveyor belt reversing roller 13 is rotated in the direction of arrow D.

Support construction 5 comprises a number of first support members in the form of first support rollers 19a-19i. The first support rollers 19a-19i are arranged on the frame of device 1 in a first peripheral endless configuration by means of first toothed wheels 21a-21d and first chains 23a and 23b so that an endless belt is as it were formed. First toothed wheels 21a and 21b are rotatable about a common rotation axis 25 relative to the frame and serve as first reversing roller for first chains 23a and 23b. First toothed wheels 21c and 21d are rotatable about a common rotation axis 27 relative to the frame and serve as second reversing roller for first chains 23a and 23b. First support rollers 19a-19i are each arranged on first chains 23a and 23b for rotation around a respective rotation axis 29a-29i.

Support construction 5 further comprises a number of second support members in the form of second support rollers 31a-31h. The second support rollers 31a-31h are arranged on the frame of device 1 in a second peripheral endless configuration by means of second toothed wheels 33a-33d and second chains 35a and 35b so that an endless belt is as it were formed. Second toothed wheels 33a and 33b are rotatable about a common rotation axis 37 relative to the frame and serve as first reversing roller for first chains 35a and 35b. Second toothed wheels 33c and 33d are rotatable about a common rotation axis 39 relative to the frame and serve as second reversing roller for second chains 35a and 35b. Second support rollers 31a-31h are each arranged on the second chains 35a and 35b for rotation around a respective rotation axis 41a-41h.

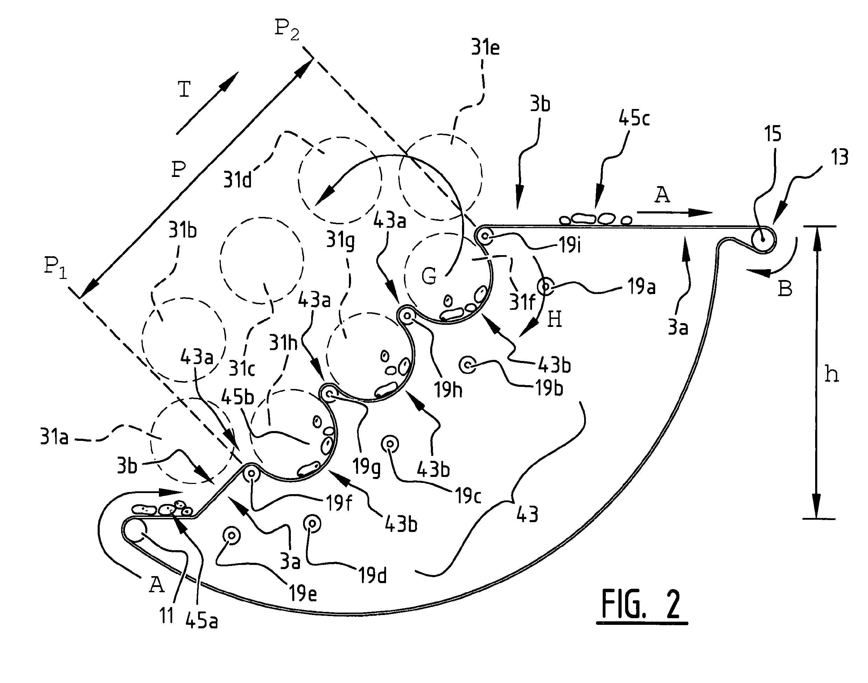

Figure 2 shows that four of the first support rollers 19e-19h are in contact with a first side of conveyor belt 3, in this case lower surface 3a of conveyor belt 3. Three of the second support rollers 31e-31h are in contact with a second side of conveyor belt 3, in this case upper surface 3b of conveyor belt 3. Support construction 5 thus supports a part of conveyor belt 3 along a transport path P.

As shown in figure 2, second support rollers 31e-31g are offset in the direction of the transport path P relative to first support rollers 19e-19h, and second support rollers 31e-31g are situated between successive first support rollers 19e-19h so that in the part of the conveyor belt along the transport path P a pattern of successive waves 43 is formed extending in a direction transversely of the transport path P, in this case in a direction perpendicularly of the plane of the drawing. Wave peaks 43a of the waves are formed by contact of conveyor belt 3 with first support rollers 19e-19h. Wave valleys 43b of the waves are formed by contact of conveyor belt 3 with second support rollers 31e-31g.

As shown in figure 2, wave valleys 43b form channels in which products for transporting and cleaning, in this case potatoes 45, are situated.

Figure 2 shows that conveyor belt 3 is displaced relative to the frame in the direction of arrows A by means of rotating the conveyor belt reversing roller 13 about rotation axis 15 in the direction of arrow B. As a result the potatoes 45a lying to the left of the wave pattern on conveyor belt 3 in figure 2 are displaced in the direction of the wave pattern, while the potatoes 45c lying to the right of the wave pattern on conveyor belt 3 in figure 2 are displaced away from the wave pattern.

The second support rollers 31e-31g are displaceable along the transport path P in the direction of transport T by rotating the second toothed wheels 33a-33d shown in figure 1 about the respective rotation axes 37 and 39 in the direction of arrow F by means of a support drive (not shown), so displacing the second chains 35a and 35b and the second support rollers 31a-31h arranged thereon in the direction of arrows G. The first support rollers 19e-19h between which the second support rollers 31e-31g are situated are pushed here in the direction of transport T so that first chains 23a and 23b with the other first support rollers 19a-19f arranged thereon are displaced in the direction of arrows H and the first toothed wheels 19a-19d shown in figure 1 are rotated about the respective rotation axes 35 and 37 in the direction of arrows I. As a result of this displacement of first support rollers 19e-19h and second support rollers 31e-31g in the direction of transport T along the transport path P the waves formed by means of these support rollers also displace in the direction of transport T along the transport path P. Potatoes 45b situated in wave valleys 43b are thus displaced in the direction of transport T along the transport path P.

During this displacement of first and second support rollers 19, 31 in the direction of transport T, from the situation shown in figure 2 the second support roller 19e is placed between the successive first support rollers 31d and 31e at the beginning of the transport path P₁ so that a new wave valley and a new wave peak are formed in the part of the conveyor belt situated between the relevant first and second support members. Because of the above-mentioned displacement of potatoes 45a in the direction of the wave pattern these potatoes 45a come to lie here in this new wave valley.

During the above stated displacement of the first and second support rollers 19, 31 in the direction of transport T, from the situation shown in figure 2 the first support roller 19h and second support roller 31g are moved away from each other at the end of the transport path P₂ so that the second support roller 31g is no longer situated between the successive first support rollers 19g and 19h. As a result the wave peak formed by the first support roller 19h and the wave valley formed by the second support roller 31g disappear from the associated part of conveyor belt 3. Owing to said displacement of conveyor belt 3 relative to the frame in the direction away from the wave pattern, potatoes 45b which were situated in the wave valley that has disappeared come to lie here at the location of potatoes 45c. Potatoes 45c are then already discharged from the device. The direction of displacement of first support roller 19h and of second support roller 31g is then reversed by the respective first and second toothed wheels so that first support roller 19h and second support roller 31g are displaced in the direction of the beginning of the transport path P₁ so as to again form a new wave peak and a new wave valley there at a later moment. When the conveyor belt reversing roller 13 is reached, the direction of displacement of the part of conveyor belt 3 in which the disappeared wave peak and the disappeared wave valley were formed is reversed so that this part of conveyor belt 3 is displaced in the direction of the beginning of transport path P₁.

Conveyor belt drive 17 and the support drive are operatively connected to a control system (not shown) with which the displacement speed of conveyor belt 3 relative to the frame in the direction of arrows A and the displacement speed of the first and second support rollers 19, 31 in the direction of respective arrows H and G can be controlled, and thereby the displacement speed of conveyor belt 3 relative to the waves in the direction in which the transport path extends.

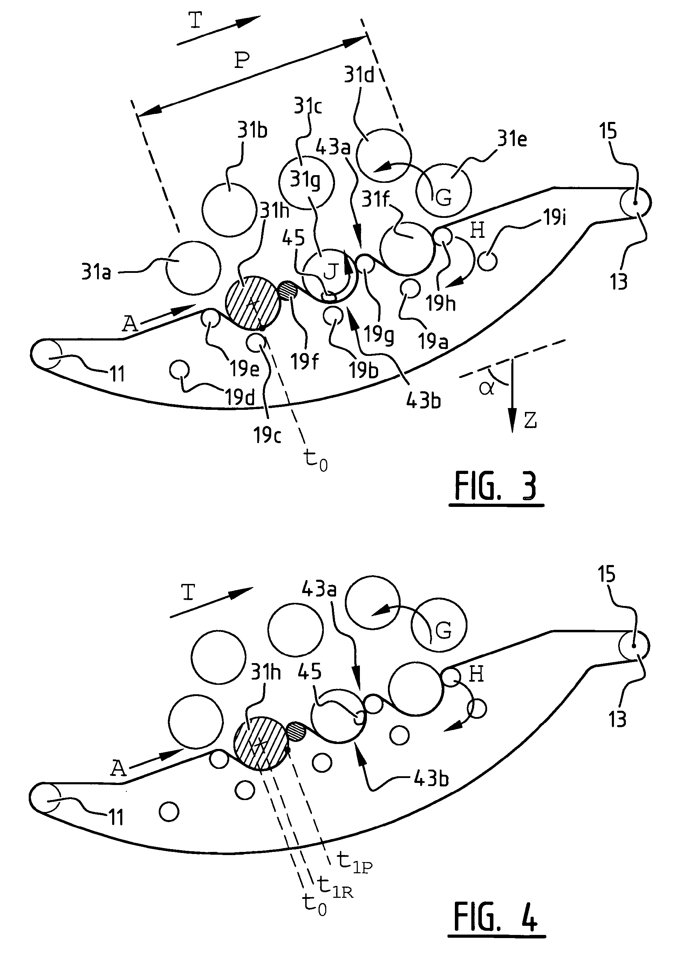

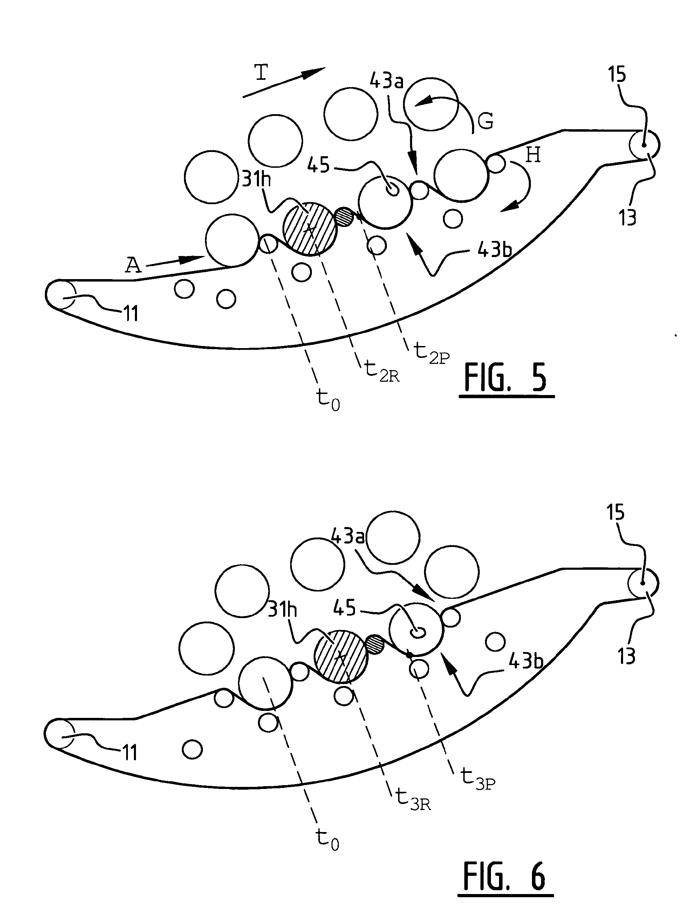

The displacement speed of conveyor belt 3 relative to the waves in the direction in which the transport path extends and the effect thereof are further elucidated with reference to figures 3-6.

In figures 3-6 the displacement of the first and second support rollers 19 and 31 relative to the frame and the displacement of conveyor belt 3 relative to the frame as described above with reference to figure 2 is made clear by means of four successive points in time.

In figures 3, 4, 5 and 6 the location of the first and second support rollers 19 and 31 and the location of a point p on the conveyor belt are shown at the respective points in time t₀, t₁, t₂ and t₃.

Figure 3 shows that the rotation axis 41h of second support roller 31h and the point p on conveyor belt 3 lie in the same line at time to.

Figures 4, 5 and 6 show the displacement of the rotation axis 41h of second support roller 31h in the direction of transport T through time for the times t₁, t₂, and t₃ by means of the respective lines t₁ᵣ, t₂ᵣ and t₃ᵣ. In addition, the displacement of the point p on conveyor belt 3 is shown for times t₁, t₂ and t₃ by means of the respective lines t₁ₚ, t₂ₚ and t₃ₚ.

Figures 3-6 thus show that the point p on conveyor belt 3 is displaced in the transport direction T relative to the frame at a higher displacement speed than the rotation axis 41h of second support roller 31h.

The displacement speed of the first and second support rollers 19, 31 along transport path P is the same. Figures 3-6 hereby also make clear that the point p on conveyor belt 3 is displaced in the transport direction T at a higher displacement speed than the waves 43 formed by the first and second support rollers 19, 31. As a result the point p, and thereby conveyor belt 3, displace along transport path P relative to waves 43.

The effect of the displacement of conveyor belt 3 along transport path P relative to waves 43 is that the potato 45 shown in one of the wave valleys 43b is displaced within this wave valley 43b in the direction of arrow J in figure 3 in the direction of one of the two adjacent wave peaks 43a. Potato 45 is pulled back by gravitational force Z here in the direction of wave valley 43b and at a certain moment drops back in the direction of wave valley 43b, as shown in the successive figures 4, 5 and 6. As a result of this displacement of potato 45 inside wave valley 43b friction forces are generated between potato 45 and conveyor belt 3 and friction forces between potato 45 and other potatoes present in the same wave valley 43b, these forces contributing toward dislodging of soil adhering to potato 45, so that potato 45 is cleaned. The dislodged soil falls through the bars of conveyor belt 3 as shown in figure 1.

The displacement speed of conveyor belt 3 along transport path P relative to waves 43 can be controlled by controlling conveyor belt drive 17 and/or the support drive. In figures 3-6 the displacement speed of conveyor belt 3 along transport path P relative to waves 43 is so high that at a certain moment potato 45 moves clear of conveyor belt 3 and is as it were thrown back in the direction of wave valley 43b. At a lower displacement speed of conveyor belt 3 along transport path P relative to waves 43 the potato 45 will not drop back but rather roll back. The movement made by the potato inside wave valley 43b influences the degree of cleaning of potato 45. The desired degree of cleaning can be set by varying the displacement speed of conveyor belt 3 along transport path P relative to waves 43 using the above stated control system.

Figures 1-6 show that the transport path P extends at an angle α relative to the direction of gravitational force Z. In the shown exemplary embodiments the angle α is such that the transport of potatoes 45 along transport path P bridges a height h. Potatoes 45 are thus transported upward. It is however also possible to increase the angle α to for instance 90° so that the transport path extends in horizontal direction. Compared to the exemplary embodiment shown in figures 1-6 the potatoes will then be pulled back to a lesser extent in the direction of the wave valley by the gravitational force. It is also possible to increase the angle α to an angle of more than 90°. Potatoes 45 are in that case transported downward. The displacement speed of conveyor belt 3 along transport path P relative to waves 43 will then however have to be chosen such that during the displacement of the potatoes inside a wave valley the potatoes 45 do not go over a wave peak to a subsequent wave valley. This movement to a subsequent wave valley in the case of a downward direction of transport T can be avoided by displacing conveyor belt 3 in a direction opposite to direction of transport T relative to waves 43. In that case conveyor belt 3 can however no longer be used to feed potatoes 45 to the wave pattern and to discharge potatoes 45 from the wave pattern following transport and cleaning.

## Claims

1. Method for transporting and cleaning products, in particular agricultural products such as onions, potatoes and carrots, in a direction of transport (T) along a transport path (P), comprising the steps of:
- forming in a part of a conveyor belt (3) a pattern of successive waves (43) extending at least in a direction transversely of the transport path (P);
- displacing the waves formed in the conveyor belt in the direction of transport (T);
- placing the products for transporting and cleaning onto the conveyor belt in order to carry the products into a wave valley (43b) of the pattern of waves and transporting along the transport path the products carried into the wave valley by means of displacing the waves formed in the conveyor belt in the direction of transport; and
- displacing the conveyor belt relative to the waves in the direction in which the transport path (P) extends.

2. Method as claimed in claim 1,
comprising of
- controlling the displacement speed of the conveyor belt (3) relative to the waves (43) in order to control the degree of cleaning of the products.

3. Method as claimed in claim 1 or 2,
comprising of
- displacing the conveyor belt (3) along the transport path (P), preferably in the direction of transport (T).

4. Method as claimed in claim 1, 2 or 3,
comprising of
- displacing the conveyor belt (3) in the direction of transport (T) relative to the waves (43).

5. Device for transporting and cleaning products, in particular agricultural products such as onions, potatoes and carrots, in a direction of transport (T) along a transport path (P), comprising:
- a frame;
- a conveyor belt (3) arranged on the frame;
- a support construction (5) arranged on the frame for supporting the conveyor belt along the transport path (P);
wherein the support construction comprises:
- a plurality of first support members (19) which are arranged movably relative to the frame and can be brought into contact with a first side (3a) of the conveyor belt; and
- a plurality of second support members (31) which are arranged movably relative to the frame and can be brought into contact with a second side (3b) of the conveyor belt remote from the first side;
wherein the second support members are offset in the direction of the transport path relative to the first support members and are placeable between successive first support members in the direction of the transport path in order to form in the conveyor belt a pattern of successive waves (43) extending at least in a direction transversely of the transport path; and
- the support construction also comprises:
- a support drive acting on the first and second support members and configured to displace the first and second support members relative to the frame such that the waves formed in the conveyor belt displace in the direction of transport along the transport path.

6. Device as claimed in claim 5,
wherein
- the conveyor belt (3) is embodied as an endless conveyor belt; and
- the device also comprises a conveyor belt drive (17) engaging on the conveyor belt and configured to displace the conveyor belt relative to the frame along the transport path (P).

7. Device as claimed in claim 6,
wherein
- the device also comprises a control system which is operatively connected to at least one of the support drive and the conveyor belt drive (17) and configured such that the displacement speed of the conveyor belt (3) relative to the waves (43) is controllable.

8. Device as claimed in any of the claims 5-7,
wherein
- the first support members (19) are arranged on the frame for displacement along the transport path (P) in a first peripheral endless configuration; and
- the second support members (31) are arranged on the frame for displacement along the transport path (P) in a second peripheral endless configuration;
wherein in use and as seen in the direction of transport (T):
- the second support members (31) are placed between successive first support members (19) at the beginning (P₁) of the transport path (P) so that a part of the wave pattern is formed in the part of the conveyor belt situated between the relevant first and second support members; and
- the first and second support members are moved away from each other at the end of the transport path so that the second support members are no longer situated between successive first support members; and
- the direction of displacement of the first and second support members is reversed at the end of the transport path so that the first and second support members are displaced in the direction of the beginning (Pof the transport path.

9. Device as claimed in any of the claims 5-8,
wherein
- the conveyor belt is a screen belt.

## Patentansprüche

1. Verfahren zum Transportieren und Reinigen von Erzeugnissen, insbesondere von landwirtschaftlichen Erzeugnissen, wie z.B. Zwiebeln, Kartoffeln und Karotten, in einer Transportrichtung (T) entlang eines Transportwegs (P), aufweisend die Schritte des:
- Ausbildens eines Musters von aufeinanderfolgenden Wellen (43), welche sich wenigstens in einer Richtung quer zum Transportweg (P) erstrecken, in einem Teil eines Förderbands (3)
- Verschiebens der Wellen, welche in dem Förderband ausgebildet sind, in der Transportrichtung (T),
- Platzierens der Erzeugnisse zum Transportieren und Reinigen auf dem Förderband, um die Erzeugnisse in ein Wellental (43b) des Musters von Wellen zu befördern, und Transportieren der in das Wellental beförderten Erzeugnisse entlang des Transportwegs mittels Verschiebens der Wellen, welche in dem Förderband ausgebildet sind, in der Transportrichtung, und
Verschiebens des Förderbands relativ zu den Wellen in der Richtung, in welcher sich der Transportweg (P) erstreckt.

2. Verfahren wie in Anspruch 1 beansprucht,
aufweisend
- Steuern der Verschiebegeschwindigkeit des Förderbands (3) relativ zu den Wellen (43), um den Reinigungsgrad der Erzeugnisse zu steuern.

3. Verfahren wie in Anspruch 1 oder 2 beansprucht,
aufweisend
- Verschieben des Förderbands (3) entlang des Transportwegs (P), vorzugsweise in der Transportrichtung (T).

4. Verfahren wie in Anspruch 1, 2 oder 3 beansprucht, aufweisend
- Verschieben des Förderbands (3) in der Transportrichtung (T) relativ zu den Wellen (43).

5. Vorrichtung zum Transportieren und Reinigen von Erzeugnissen, insbesondere von landwirtschaftlichen Erzeugnissen, wie z.B. Zwiebeln, Kartoffeln und Karotten, in einer Transportrichtung (T) entlang eines Transportwegs (P), aufweisend:
- einen Rahmen,
- ein Förderband (3), welches an dem Rahmen angeordnet ist,
- eine Stützkonstruktion (5), welche an dem Rahmen angeordnet ist, zum Abstützen des Förderbands entlang des Transportwegs (P),
wobei die Stützkonstruktion aufweist:
- eine Mehrzahl an ersten Stützelementen (19), welche relativ zu dem Rahmen bewegbar angeordnet sind und mit einer ersten Seite (3a) des Förderbands in Kontakt gebracht werden können, und
eine Mehrzahl an zweiten Stützelementen (31), welche relativ zu dem Rahmen bewegbar angeordnet sind und mit einer zweiten Seite (3b) des Förderbands, welche von der ersten Seite entfernt ist, in Kontakt gebracht werden können,
wobei die zweiten Stützelemente in der Richtung des Transportwegs relativ zu den ersten Stützelementen versetzt sind und in der Richtung des Transportwegs zwischen aufeinanderfolgenden ersten Stützelementen anordenbar sind, um in dem Förderband ein Muster von aufeinanderfolgenden Wellen (43) auszubilden, welche sich wenigstens in einer Richtung quer zu dem Transportweg erstrecken, und
- die Stützkonstruktion außerdem aufweist:
- einen Unterstützungsantrieb, welcher auf die ersten und die zweiten Stützelemente wirkt und dazu eingerichtet ist, die ersten und die zweiten Stützelemente relativ zu dem Rahmen zu verschieben, so dass die Wellen, welche in dem Förderband ausgebildet sind, sich in der Transportrichtung entlang des Transportwegs verschieben.

6. Vorrichtung wie in Anspruch 5 beansprucht,
wobei
- das Förderband (3) als ein Endlosförderband ausgebildet ist, und
- die Vorrichtung außerdem einen Förderbandantrieb (17) aufweist, welcher mit dem Förderband im Eingriff ist und dazu eingerichtet ist, das Förderband relativ zu dem Rahmen entlang des Transportwegs (P) zu verschieben.

7. Vorrichtung wie in Anspruch 6 beansprucht,
wobei
- die Vorrichtung außerdem ein Steuersystem aufweist, welches mit wenigstens einem von dem Unterstützungsantrieb und dem Förderbandantrieb (17) wirkverbunden ist und eingerichtet ist, so dass die Verschiebegeschwindigkeit des Förderbands (3) relativ zu den Wellen (43) steuerbar ist.

8. Vorrichtung wie in irgendeinem der Ansprüche 5-7 beansprucht,
wobei
- die ersten Stützelemente (19) an dem Rahmen zur Verschiebung entlang des Transportwegs (P) in einer ersten Umfangsendloskonfiguration angeordnet sind, und
die zweiten Stützelemente (31) an dem Rahmen zur Verschiebung entlang des Transportwegs (P) in einer zweiten Umfangsendloskonfiguration angeordnet sind,
wobei in Verwendung und in der Transportrichtung (T) gesehen:
- am Anfang (P₁) des Transportwegs (P) die zweiten Stützelemente (31) zwischen aufeinanderfolgenden Stützelementen (19) angeordnet sind, so dass ein Teil des Wellenmusters in dem Teil des Förderbands ausgebildet ist, welcher zwischen den relevanten ersten und zweiten Stützelementen liegt, und
- die ersten und die zweiten Stützelemente an dem Ende des Transportwegs voneinander wegbewegt werden, so dass die zweiten Stützelemente nicht länger zwischen aufeinanderfolgenden ersten Stützelementen liegen, und
- die Verschieberichtung der ersten und der zweiten Stützelemente an dem Ende des Transportwegs umgekehrt wird, so dass die ersten und die zweiten Stützelemente in die Richtung des Anfangs (P des Transportwegs verschoben werden.

9. Vorrichtung wie in irgendeinem der Ansprüche 5-8 beansprucht,
wobei
- das Förderband ein Siebband ist.

## Revendications

1. Procédé destiné à transporter et à nettoyer des produits, en particulier des produits agricoles tels que des oignons, des pommes de terre et des carottes, dans une direction de transport (T) le long d'un chemin de transport (P), comprenant les étapes consistant à :
- former dans une partie de la bande transporteuse (3) un motif de vagues successives (43) qui s'étendent au moins dans une direction transversale du chemin de transport (P) ;
- déplacer les vagues formées dans la bande transporteuse dans la direction de transport (T) ;
- placer les produits à transporter et à nettoyer sur la bande transporteuse de façon à amener les produits dans une vallée de vagues (43b) du motif de vagues, et à transporter le long du chemin de transport les produits amenés dans la vallée de vagues grâce au déplacement des vagues formées dans la bande transporteuse dans la direction de transport ; et
- déplacer la bande transporteuse par rapport aux vagues dans la direction dans laquelle s'étend le chemin de transport (P).

2. Procédé selon la revendication 1, comprenant une étape consistant à :
- commander la vitesse de déplacement de la bande transporteuse (3) par rapport aux vagues (43) de façon à commander le degré de nettoyage des produits.

3. Procédé selon la revendication 1 ou la revendication 2, comprenant une étape consistant à :
- déplacer la bande transporteuse (3) le long du chemin de transport (P), de préférence dans la direction de transport (T).

4. Procédé selon l'une quelconque des revendications 1 à 3, comprenant une étape consistant à :
- déplacer la bande transporteuse (3) dans la direction de transport (T) par rapport aux vagues (43).

5. Dispositif destiné à transporter et à nettoyer des produits, en particulier des produits agricoles tels que des oignons, des pommes de terre et des carottes, dans une direction de transport (T) le long d'un chemin de transport (P), comprenant :
- un bâti ;
- une bande transporteuse (3) disposé sur le bâti ;
- une construction de support (5) agencée sur le bâti et destinée à supporter la bande transporteuse le long du chemin de transport (P) ;
dans lequel la construction de support comprend :
- une pluralité de premiers éléments de support (19) qui sont agencés de manière mobile par rapport au bâti et qui peuvent être mis en contact avec un premier côté (3a) de la bande transporteuse ; et
- une pluralité de seconds éléments de support (31) qui sont agencés de manière mobile par rapport au bâti et qui peuvent être mis en contact avec un second côté (3b) de la bande transporteuse distant du premier côté ;
dans lequel les seconds éléments de support sont décalés dans la direction du chemin de transport par rapport aux premiers éléments de support, et peuvent être placés entre des premiers éléments de support successifs dans la direction du chemin de transport de façon à former, dans la bande transporteuse, un motif de vagues successives (43) qui s'étendent au moins dans une direction transversale du chemin de transport ; et la construction de support comprend également :
- une commande de support qui agit sur les premiers et seconds éléments de support et qui est configurée de façon à déplacer les premiers et seconds éléments de support par rapport au bâti de telle sorte que les vagues formées dans la bande transporteuse se déplacent dans la direction de transport le long du chemin de transport.

6. Dispositif selon la revendication 5, dans lequel :
- la bande transporteuse (3) est incorporé sous la forme de la bande transporteuse sans fin ; et
- le dispositif comprend également une commande de bande transporteuse (17) qui vient en prise avec la bande transporteuse et qui est configurée de façon à déplacer la bande transporteuse par rapport au bâti le long du chemin de transport (P).

7. Dispositif selon la revendication 6, dans lequel :
- le dispositif comprend également un système de commande qui est connecté de manière opérationnelle à l'une au moins de la commande de support et de la commande de tablier transporteuse (17), et qui est configuré de façon à pouvoir commander la vitesse de déplacement de la bande transporteuse (3) par rapport aux vagues (43).

8. Dispositif selon l'une quelconque des revendications 5 à 7, dans lequel :
- les premiers éléments de support (19) sont agencés sur le bâti pour un déplacement le long du chemin de transport (P) dans une première configuration sans fin périphérique ; et
- les seconds éléments de support (31) sont agencés sur le bâti pour un déplacement le long du chemin de transport (P) dans une seconde configuration sans fin périphérique ;
dans lequel, en service et quand on regarde dans la direction de transport (T) :
- les seconds éléments de support (31) sont placés entre des premiers éléments de support successifs (19) au début (P₁) du chemin de transport (P), de telle sorte qu'une partie du motif de vagues soit formée dans la partie de la bande transporteuse située entre les premiers et les seconds éléments de support appropriés ; et
- les premiers et seconds éléments de support sont éloignés les uns des autres au niveau de l'extrémité du chemin de transport de telle sorte que les seconds éléments de support ne soient plus situés entre des premiers éléments de support successifs ; et
- la direction de déplacement des premiers et seconds éléments de support, est inversée au niveau de l'extrémité du chemin de transport de telle sorte que les premiers et seconds éléments de support soient déplacés dans la direction du début (P₁) du chemin de transport.

9. Dispositif selon l'une quelconque des revendications 5 à 8, dans lequel :
- la bande transporteuse est un tablier cribleur.
